# FASCICULE DE BREVET EUROPEEN

(11) **EP 2 400 726 B1**
(45) Date de publication et mention de la délivrance du brevet: **15.01.2014**
(21) Numéro de dépôt: 11166095.7
(22) Date de dépôt: 13.05.2011
(51) Int. Cl.: H04L 29/08, H04L 12/22

(54) **Procédé d'identification d'un réseau local identifié par une adresse IP publique**
Verfahren zur Identifizierung eines lokalen Netzwerks, welches durch eine offentliche IP Adresse identifiziert wird
Method for identifying a local network identified by a public IP address

(30) Priorité: 25.06.2010 FR 1055118
(43) Date de publication de la demande: 28.12.2011
(73) Titulaire: Société Française du Radiotéléphone, 75008 Paris (FR)
(72) Inventeur: Guindolet, Stéphane, 75012, PARIS (FR); Sultan, Alexis, 75019, PARIS (FR); Arvinte, Alexandre, 75012, PARIS (FR)
(74) Mandataire: Marconnet, Sébastien

(56) Documents cités:
- US-A1- 2003 093 558
- US-A1- 2006 227 797
- Axiros GmbH: "Supporting The Installed Base", , 2009, pages 1-22, XP002613863, Extrait de l'Internet: URL:https://trac.axiros.com/projects/Excha nge/raw-attachment/wiki/Marketing/Presenta tions/GenericDeviceManagement/LegacyDevice Integration.pdf [extrait le 2010-12-13]
- BROADBAND FORUM: "TR-069 CPE WAN Management Protocol v1.1 Issue 1 Amentment 1", BROADBAND FORUM TECHNICAL REPORT,, no. ISSUE 1 AMENDMENT 1, 30 novembre 2006 (2006-11-30), pages 1-138, XP002550467,
- "LA FONERA User Manual", INTERNET CITATION, 26 July 2007 (2007-07-26), page 112pp, XP007912602, Retrieved from the Internet: URL:http://www.fon.com/images/media/common /m2201_1_01.pdf [retrieved on 2010-04-13]

## Description

### Domaine de l'invention

La présente invention concerne un procédé d'identification d'un réseau local identifié par une adresse IP publique. En particulier, mais non exclusivement, l'invention concerne l'identification d'un réseau local connecté à une passerelle qui le relie à un réseau distant tel qu'Internet.

### Etat de la technique

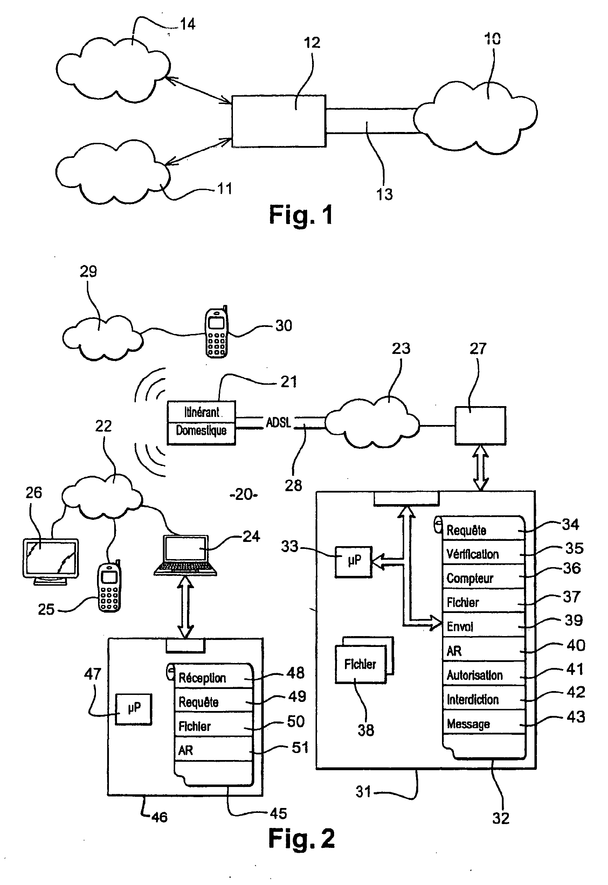

La connexion à un réseau distant 10, par exemple Internet, depuis un réseau local 11 (LAN pour Local Area Network) domestique de l'abonné, illustrée à la figure 1, se fait classiquement à l'aide d'un dispositif 12 d'accès, appelé généralement modem. Un dispositif 12 d'accès est un équipement de télécommunication qui relie deux réseaux différents l'un de l'autre, comme ici le réseau local 11 et le réseau distant 10.

Un exemple de dispositif 12 d'accès est un équipement fourni par un Fournisseur d'Accès Internet (FAI) à ses abonnés, tel que celui commercialisé sous la marque Neufbox.

Les équipements du réseau local 11 de l'usager, susceptibles de se connecter au dispositif 12 d'accès, sont par exemple un ordinateur personnel, un téléphone ou un téléviseur. Le dispositif 12 attribue un identifiant IP local privé à chacun des équipements pour les reconnaître, ce qui en fait le réseau local 11. La connexion entre le réseau local 11 et le dispositif 12 d'accès peut se faire par l'intermédiaire d'une liaison Ethemet ou Wi-Fi.

Lors de la synchronisation du dispositif 12 d'accès sur le réseau 13 du FAI, un identifiant réseau IP public délivré par le FAI est attribué audit dispositif d'accès.

Le dispositif 12 d'accès étant un intermédiaire entre le réseau local 11 et le réseau distant 10, tous les équipements dudit réseau local 11 connectés au dispositif 12 d'accès ont le même identifiant public IP sur ledit réseau distant.

Aujourd'hui, la plupart des dispositifs 12 d'accès sont des points d'accès publics, également connus sous l'appellation de HotSpot. Ces « HotSpot maison » permettent de ce fait aux usagers itinérants de profiter de la bande passante Wi-Fi non utilisée afin d'accéder depuis leurs terminaux de communication à une messagerie, au réseau Internet, ou à des applications partagées. Un utilisateur itinérant, voulant se connecter au réseau distant 10 par l'intermédiaire du dispositif 12 d'accès, doit s'authentifier avant toute connexion au réseau distant. Le dispositif 12 attribue un identifiant IP local privé à chacun des terminaux de communication itinérants pour les reconnaître, ce qui en fait le réseau local 14 itinérant. Ce réseau local 14 itinérant est distinct du réseau local 11 domestique et dispose d'un adressage IP Privé différent.

Le réseau 13 du FAI, par l'intermédiaire d'un DHCP central chez le FAI, alloue un identifiant IP public propre à chaque terminal itinérant du réseau 14 itinérant. Cet identifiant IP public propre à chaque terminal itinérant est différent de l'identifiant IP public du dispositif 12 d'accès sur lequel il se connecte.

Aujourd'hui, Internet est devenu l'autoroute de l'information pour l'acheteur. La plupart des gens apprécient les transactions en ligne que peut offrir Internet. En conséquence, Internet est devenu l'outil de vente le plus performant.

Il est connu de payer les achats sur Internet par une méthode de paiement sur facture Internet proposée par les FAI. Cette méthode est une solution de paiement sécurisée sur Internet qui permet aux éditeurs de services de vendre facilement leurs services et contenus sur le web à près de 80% des internautes. Grâce à l'identification automatique du fournisseur d'accès de l'internaute à partir de l'identifiant public IP, l'internaute peut effectuer un achat en deux clics seulement, le montant étant ensuite reporté sur sa facture Internet. Ainsi, aucune donnée personnelle ou bancaire n'est nécessaire grâce à cette identification automatique du FAI.

Le FAI identifié détermine à qui appartient l'identifiant IP public afin de reporter sur le compte du client associé à cet identifiant IP public le montant de l'achat sur sa facture Internet.

Toutefois, la croissance rapide de l'Internet au delà de toute prévision aboutit à l'épuisement prévisible des blocs d'adresses IPv4 disponibles, ce qui menace le développement du réseau. Pour remédier à ce problème ou repousser l'échéance, plusieurs techniques existent, dont notamment, IPv6, dont la capacité d'adressage est considérable. Cependant, à ce jour, le déploiement de l'IPv6 atteint rarement l'internaute.

Pour utiliser au mieux le stock d'adresses IP publiques existantes de l'IPv4, certains fournisseurs d'adresse Internet ont adopté la solution qui consiste à ne donner qu'une seule adresse IP publique accessible sur l'Internet dans la plupart des offres grand public. Par conséquent, il est attribué au dispositif 12 d'accès une unique adresse IP publique routable sur Internet. Cette adresse IP n'est pas fixe par dispositif 12 d'accès, elle change à chaque reconnexion dudit dispositif sur le réseau 13 du FAI.

Ainsi, les internautes, quel que soit leur réseau privé d'appartenance, vont avoir en sortie cette adresse publique du dispositif 12 d'accès.

L'inconvénient de cette solution est qu'il est quasi impossible de déterminer avec certitude le réseau privé connecté sur le réseau distant 10, à partir de son adresse IP publique. Même le FAI n'en ait pas capable. Le FAI est capable de fournir avec certitude une identification de l'internaute à qui appartient le dispositif 12 d'accès, à partir de l'adresse IP publique qui lui est attribuée.

Ainsi, un problème se pose dans le cas de la méthode de paiement sur facture Internet proposée par les FAI. En effet, la facture Internet de l'abonné risquerait de comporter des achats effectués par un itinérant du fait que son identifiant public est identique à celui du dispositif 12 d'accès.

Pour résoudre ce problème, l'accès à la méthode de paiement sur facture Internet se fait par la fourniture, par le FAI, d'un identifiant et d'un mot de passe. Ainsi, le FAI identifié envoie une requête de saisie d'identifiant et de mot de passe à l'internaute afin de l'authentifier.

Le principal inconvénient de la saisie d'un identifiant et d'un mot de passe est le risque de diminution du nombre de transactions. En effet, lors de la transaction, on est redirigé vers un autre site ce qui peut faire croire à l'utilisateur qu'il est victime d'hameçonnage (phishing). Et bien sûr l'opération globale est plus longue à cause de cette déviation. Il faut en outre, en pleine transaction commerciale, entrer son identifiant et son mot de passe dans un formulaire, ce qui peut être fastidieux voire rédhibitoire pour l'internaute.

De plus, l'internaute risque d'oublier ou de perdre son identifiant et/ou son mot de passe et de devoir annuler l'achat au moment de la transaction.

Ainsi, il existe aujourd'hui un besoin de trouver un moyen économique, sécurisé, fiable et simple pour permettre au FAI d'utiliser au mieux le stock d'adresses publiques existantes lui ayant été attribuées par les autorités compétentes tout en évitant une authentification par saisie de mot de passe.

On connaît dans l'état de la technique le document « Supporting The Installed Base » (Axiros GmbH), 2009, pages 1 à 22, XP002613863 et le document "La FONERA User Manual", 2007, XP007912602.

### Exposé de l'invention

L'invention a justement pour but de répondre à ce besoin tout en remédiant aux inconvénients des techniques précédemment citées. Pour ce faire, l'invention a pour objet un procédé d'authentification d'un réseau local privé identifié par une adresse IP publique. L'invention utilise l'accessibilité à certains ports comme moyen d'authentifier le réseau privé utilisé par l'internaute derrière l'adresse publique du dispositif d'accès.

Les ports permettent de réaliser simultanément des milliers de connexions logiques sur la même adresse IP. Ils permettent de partager la liaison Internet entre des programmes différents et des machines différentes.

Il existe un nombre de ports de 0 à 65535, tous utilisables sur le réseau privé domestique de l'abonné. Cependant, seuls certains ports, dits ici communs, sont autorisés par le FAI sur le réseau itinérant. Tous les autres ports sont bloqués par le FAI. Ces ports communs autorisés sur les «hotspots» sont notamment ceux pour le :
- mail,
- http,
- SIP (Session Initiation Protocol), qui est un protocole standard ouvert de gestion de sessions souvent utilisé dans les télécommunications multimédia (son, image, etc.). Il est destiné à la téléphonie par Internet (la VoIP) mais aussi à de nombreuses autres applications telles que la visiophonie, la messagerie instantanée, la réalité virtuelle ou même les jeux vidéo.
- IPsec (Internet Protocol Security), qui est défini par l'IETF comme un cadre de standards ouverts pour assurer des communications privées et protégées sur des réseaux IP, par l'utilisation des services de sécurité cryptographiques, est un ensemble de protocoles utilisant des algorithmes permettant le transport de données sécurisées sur un réseau IP.

Pour authentifier un internaute connecté au dispositif d'accès, un programme de vérification de port lui est transmis par l'intermédiaire d'un port commun ouvert. Ce programme de vérification de port s'exécute sur le terminal de l'internaute au travers d'un logiciel de navigation et émet une requête de récupération de données à destination du réseau distant sur un port spécifique prédéfini. Ce port spécifique prédéfini est choisi de sorte à être bloqué pour les réseaux privés itinérants et à être ouvert pour les réseaux privé domestiques.

Lorsque le terminal reçoit du port spécifique les données récupérées, l'internaute est identifié comme étant l'abonné et la transaction est autorisée.

Afin d'éviter tous risques d'usurpation ou de modification du résultat du test, la suite de la transaction se déroule sur le port testé. Ainsi, même si un utilisateur procède à une modification du résultat du test dans un but de fraude, la transaction ne pourra pas être réalisée puisque l'utilisateur ne pourra poursuivre la transaction sur un port dont l'accès lui est interdit depuis le réseau itinérant.

Si, au bout d'une durée prédéfinie, aucune réponse n'est reçue du réseau distant, l'internaute est considéré comme étant un itinérant. Dans ce cas, un message d'erreur ou un formulaire d'authentification par mot de passe est transmis au terminal sur le port commun d'origine.

Il est également possible, selon l'invention, de procéder au téléchargement, au travers du port commun, d'un fichier contenant une valeur prédéfinie. Par suite le programme de vérification de port dispose d'un cas de sortie uniquement sur cette valeur. Ceci permet donc de limiter les cas de faux positifs liés à des navigateurs ne disposant pas de capacités à exécuter correctement des programmes.

Plus précisément, l'invention a pour objet un procédé d'identification d'un réseau local identifié par une adresse IP publique selon la revendication 1.

Avantageusement, l'invention est également caractérisée en ce que lors de la procédure d'identification du réseau local connecté au réseau distant, les communications entre ces deux réseaux s'effectuent sur le port spécifique et après identification du réseau local, les communications entre ledit réseau local et le réseau distant s'effectuent sur le port spécifique.

Avantageusement, l'invention est également caractérisée en ce qu'une requête d'identification du réseau local est initiée par le réseau distant, lors d'une transaction par une méthode de paiement sur facture Internet ou lorsque des services d'un Fournisseur d'accès nécessite une telle identification.

Il est à noter que si le fournisseur d'accès utilisait directement un port spécifique pour interdire l'accès à un service depuis le réseau itinérant, toute tentative d'accès audit service se traduirait par une erreur peu explicite. Avec l'invention, le pré-test réalisé par le programme de vérification permet donc d'afficher un message d'erreur personnalisé par l'opérateur et expliquant clairement l'interdiction d'accès au service du fait de l'utilisation d'un réseau itinérant.

L'invention a également pour objet un serveur d'identification d'un réseau local selon la revendication 6.

L'invention permet ainsi de mettre en oeuvre l'utilisation d'un port spécifique pour une transaction tout en affichant à l'utilisateur un message d'erreur en cas d'indisponibilité du port du fait de l'utilisation d'un réseau itinérant.

### Brève description des dessins

L'invention sera mieux comprise à la lecture de la description qui suit et à l'examen des figures qui l'accompagnent. Celles-ci ne sont présentées qu'à titre indicatif et nullement limitatif de l'invention.
La figure 1 montre une représentation schématique, de l'état de la technique, d'un mode de connexion à un réseau distant, tel qu'Internet, par l'intermédiaire d'une box, déjà décrite.
La figure 2 montre une représentation schématique de différents réseaux connectés à un réseau distant par l'intermédiaire d'une box selon un mode de réalisation de l'invention.
La figure 3 montre une illustration d'étapes du procédé d'identification selon un mode de réalisation de l'invention.

### Description détaillée de modes de réalisation de l'invention

Il est représenté, sur la figure 2, un système de télécommunication désigné par la référence générale 20. Le système 20 comprend un dispositif d'accès 21 s'intercalant entre deux réseaux. Ce type de dispositif 21 d'accès couramment appelé «box » propose des offres Triple-Play (Internet, téléphonie et télévision) ainsi que de nombreuses fonctionnalités très utiles qui vont du routeur au Wi-Fi. Ce dispositif d'accès 21 est fourni par un fournisseur d'accès Internet à ses abonnés, notamment à ses abonnés ADSL. L'équipement ADSL commercialisé sous la marque Neufbox® de SFR est un exemple de dispositif d'accès. Généralement, le dispositif d'accès 21 est relié au réseau téléphonique du domicile de l'abonné.

Dans notre exemple de réalisation, le dispositif d'accès 21 s'intercale entre un réseau local 22 et un réseau Internet 23. Le réseau local 22 est un réseau domestique privé utilisant le protocole IP. Le dispositif d'accès 21 a pour fonction notamment de gérer des flux de communication entre le réseau local 22 et le réseau Internet 23.

Le dispositif d'accès 21 est muni d'une borne d'accès sans fil (non représentée) à un réseau radio. La borne peut être une borne Wi-Fi, Bluetooth ou Wimax ou tout autre technologie permettant un accès mixte propriétaire / itinérant (FemtoCell, LTE...). Cette borne permet aux terminaux des utilisateurs équipés de cartes, selon la technologie Wi-Fi, Wimax ou Bluetooth (marque déposée du Bluetooth® SIG, Inc.) utilisée, de se connecter au réseau 23 Internet. La borne est munie d'un module émetteur et d'un module récepteur (non représentés) d'un signal radioélectrique. Le signal radio issu d'un module émetteur d'un terminal de l'utilisateur est capté par la borne d'accès sans fil du dispositif d'accès 21 qui se charge de le relayer vers le réseau 23 Internet.

Dans l'exemple de la figure 2, le réseau local domestique 22 est un réseau Wi-Fi. Ce réseau local 22 Wi-Fi est protégé par une clé Wi-Fi personnelle (clé Wep ou Wpa). Le dispositif d'accès 21 permet la connexion au réseau local 22 de différents types d'équipements, tels qu'un ordinateur 24 ou un téléphone 25, comprenant des moyens d'émission et de réception de signaux Wi-Fi. Le réseau local 22 Wi-Fi peut être un réseau utilisant notamment la bande de fréquence des 2,4 GHz ou 5 GHz permettant un débit de 11 Mb/s ou de 54 Mb/s.

Le réseau local 22 sans fil peut être un réseau selon la technologie d'accès Wimax utilisant la bande de fréquence située entre 2 et 66 GHz, permettant d'obtenir un débit pouvant s'élever dans des conditions optimales jusqu'à 70 Mbit/s, sur une distance pouvant théoriquement atteindre 70 kilomètres.

Le réseau local 22 sans fil peut également être un réseau selon la technologie d'accès Bluetooth.

Le réseau local 22 sans fil peut également être un réseau type 3G fonctionnant par l'intermédiaire d'un répéteur personnel type FemtoCell.

Le réseau local 22 domestique peut également être un réseau filaire Ethernet. Pour ce faire, le dispositif d'accès 21 comprend une pluralité de ports physiques de connexion d'équipements au réseau local 22, comme par exemple des prises de type RJ45. Différents types d'équipements peuvent être connectés aux ports physiques, notamment l'ordinateur personnel 24, un poste de télévision 26 ou le téléphone 25.

Les équipements susceptibles de se connecter au dispositif d'accès 21 sont des équipements compatibles avec le protocole IP. Le dispositif d'accès 21 comprend un serveur DHCP destiné à l'attribution automatique et dynamique d'un identifiant réseau, notamment d'une adresse IP privée, à tout équipement se connectant au dispositif d'accès, soit au moyen d'un câble de liaison à l'un des ports physiques, soit par Wi-Fi. L'adresse IP privée permet de distinguer les équipements les uns des autres et ainsi de leur envoyer des messages qui leur sont destinés.

Lors de la synchronisation du dispositif d'accès 21 sur le réseau 28 du FAI, un identifiant réseau IP public délivré par le FAI est attribué audit dispositif d'accès.

Le dispositif d'accès 21 est un intermédiaire entre le réseau local 22 domestique et le réseau 23 Internet. Tous les équipements du réseau domestique 22 connectés au réseau 23 Internet par l'intermédiaire de ce dispositif d'accès 21 ont le même identifiant public IP sur ledit réseau distant.

Le dispositif d'accès 21 est également configuré de sorte à se comporter comme un point d'accès public également connu sous l'appellation de HotSpot. Le dispositif d'accès 21 permet par conséquent à des usagers itinérants de se connecter à un réseau privé itinérant 29 sans fil. Il leur permet en fait de profiter de la bande passante sans fil non utilisée afin d'accéder depuis leurs terminaux 30 de communication à une messagerie, au réseau 23 Internet, ou à des applications partagées. Dans un mode de réalisation, les usagers itinérants peuvent profiter d'un débit de l'ordre de 512 Ko/seconde.

Un utilisateur itinérant, voulant se connecter au réseau distant 23 par l'intermédiaire du dispositif 22 d'accès, doit au préalable s'associer avant toute authentification. Lors de la phase d'association, le terminal 30 itinérant adresse une requête d'attachement au dispositif 21 d'accès qui réclame son identité en retour. Le dispositif 21 d'accès gère chaque demande d'attachement par le biais de deux ports virtuels : un port ouvert restreint au trafic d'authentification et un port sous contrôle initialement fermé. Le port sous contrôle reste fermé dans cette phase, prévenant tout accès direct aux ressources réseau partagées. Le dispositif 21 d'accès relaie les messages d'authentification vers un serveur d'authentification local ou déporté au sein du réseau du FAI. Le serveur authentifie le terminal 30 itinérant. L'authentification peut être effectuée par la saisie d'un identifiant et d'un mot de passe ou par le biais d'un programme apte à jouer une identification par le biais de processus automatisés.

Une autorisation est retournée par le serveur d'authentification au dispositif 21 d'accès qui relaiera désormais l'ensemble du trafic du terminal 30. Le port, sous contrôle associé à la connexion, passe de l'état fermé à ouvert.

Le dispositif 12 attribue, après association, un identifiant IP local privé à chacun des terminaux 30 de communications itinérants, pour les reconnaitre, ce qui en fait le réseau privé itinérant 29 sans fil. Ce réseau local itinérant 29 sans fil est distinct du réseau local 22 domestique.

Lorsqu'un équipement du réseau domestique 22 ou du réseau itinérant 29 envoie des paquets à un serveur 27 de services par l'intermédiaire du réseau Internet 23, le dispositif d'accès 21 remplace l'adresse privée dudit équipement par son adresse publique suivie d'un numéro de port libre choisi au hasard. Puis, ledit dispositif d'accès enregistre temporairement dans une mémoire de stockage l'adresse et le port associés audit équipement. Les ports sont des connexions virtuelles permettant de réaliser simultanément des milliers de connexions logiques sur la même adresse IP.

Le serveur 27 de destination renvoie la réponse sur l'adresse et le port visible du réseau Internet 23 au dispositif d'accès. Celui-ci fait alors la transformation inverse pour renvoyer les paquets vers l'équipement local émetteur.

Pour le réseau domestique 22, le dispositif d'accès 21 choisit un port dans l'ensemble des ports existants (un nombre de 0 à 65535).

Pour le réseau itinérant 29, le dispositif d'accès 21 choisit un port dans un ensemble de ports prédéfinis communs. Ces ports prédéfinis, par exemple une dizaine, permettent essentiellement à l'usager de consulter ses e-mails, sa messagerie instantanée, de naviguer sur Internet. Ces ports peuvent être le port 80, le port 110, le port 400, le port 443, le port 25 etc.. Par exemple, les ports 2299 et 2400 nécessaires aux jeux ne sont pas autorisés. La définition des ports ouverts et fermés pour l'accès itinérant est établie selon la politique commerciale de l'opérateur et des usages qu'il veut promouvoir lors d'un accès itinérant.

Lorsqu'une identification du réseau local est exigée par le serveur 27 de services, un programme 32 d'authentification est exécuté. Cette identification du réseau local peut être nécessaire, notamment dans le cadre d'une transaction par une méthode de paiement sur facture Internet proposée par les FAI.

Cette identification du réseau local peut également être nécessaire dans le cadre notamment de services propres au FAI nécessitant une authentification de l'internaute à partir de l'adresse IP publique de sa box. Ces services peuvent être entre autres la gestion du Compte, la boutique en ligne, l'accès à l'espace de facturation, l'accès aux emails, la restriction d'accès pour des services sur abonnement etc.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

Le programme 32 d'authentification de l'invention est un logiciel qui peut être réalisé sous forme d'une application 31 à télécharger dans le serveur 27. L'application 31 commande l'exécution, par un microprocesseur 33 du serveur 27, des codes instructions d'une mémoire programmes dudit serveur 27 comprenant ledit programme d'authentification. L'application 31 est également apte à assurer la gestion des travaux, les opérations d'entrée-sortie sur les périphériques, l'affectation des ressources aux différents processus, l'accès aux bibliothèques de programmes et aux fichiers, ainsi que la compatibilité des travaux.

L'exemple de la figure 2 montre une représentation schématique d'une architecture de l'application 31.

La mémoire de programmes est divisée en plusieurs zones, chaque zone correspondant à une fonction ou à un mode de fonctionnement du programme d'authentification de l'invention. De même, lorsque l'on prête une action à un programme, cette action correspond à la mise en oeuvre par un microprocesseur, connecté à une mémoire dans laquelle est enregistré le programme, de tout ou partie des codes instructions formant ledit programme.

Seules les zones de la mémoire de programme du serveur 27 intéressant le plus directement l'invention sont représentées.

Une zone 34 comporte des codes instructions pour recevoir et traiter une requête d'authentification d'un réseau local identifié par une adresse IP publique, en vue d'une poursuite d'une session initiée entre le réseau local et le serveur 27. Une zone 35 comporte des codes instructions pour transmettre, sur l'adresse IP publique et le port d'origine visible du réseau Internet 23, un programme 45 de vérification de port et un port spécifique. Ce port est spécifique en ce qu'il est inaccessible à partir du réseau itinérant 29. Ce port spécifique peut être transmis simultanément au programme de vérification de port, séparément ou indus dans ledit programme de vérification.

Une zone 36 comporte des codes instructions pour déclencher un compteur à rebours, dont la durée prédéfinie est par exemple de l'ordre d'une seconde.

Une zone 37 comporte des codes instructions pour recevoir et traiter une requête de récupération d'un fichier enregistré dans une mémoire 38 de données du serveur 27, durant le délai du compteur à rebours. Cette requête, transmise par le dispositif d'accès 21 à destination du serveur 27, est affectée de l'adresse IP publique et du port spécifique.

Une zone 39 comporte des codes instructions pour prélever de la mémoire 38 de données ledit fichier et pour ensuite le transmettre sur l'adresse publique et le port spécifique.

Une zone 40 comporte des codes instructions pour recevoir du réseau Internet 23 un accusé de réception du fichier émis par le dispositif d'accès 21. Une zone 41 comporte des codes instructions pour autoriser la poursuite de l'opération sur le serveur 27, dès que l'accusé réception est reçu par les codes instructions de la zone 40. Les codes instructions de la zone 41 peuvent également obliger le serveur 27 à poursuivre le reste de la session, après la procédure d'authentification, sur le port spécifique.

Une zone 42 comporte des codes instructions pour interdire la poursuite de la session en cours à l'issue du compteur à rebours et lorsqu'aucune requête de récupération n'est reçue du réseau 23 Internet. Une zone 43 comporte des codes instructions pour élaborer un message d'erreur et le transmettre sur l'adresse publique et le port d'origine. Ce message d'erreur peut comporter une information du type « vous n'êtes pas autorisé à effectuer cette opération ». Dans une variante, une page d'authentification par identifiant et mot de passe peut être élaborée et envoyée à l'adresse publique et au port d'origine.

Dans une variante, l'application 31 d'authentification de réseau local peut être téléchargée sur un serveur du réseau 28 du FAI ou sur un serveur d'un tiers. Dans ce cas, le serveur 27 émet une requête d'autorisation de poursuite de la session au serveur du FAI ou au serveur tiers qui exécute ensuite l'application 31.

Le programme 45 de vérification de port de l'invention est un logiciel qui peut être réalisé sous forme d'une application 46. L'application 46 commande l'exécution, par un microprocesseur 47 de l'équipement connecté au dispositif d'accès 21, des codes instructions d'une mémoire programmes dudit équipement comprenant ledit programme d'authentification.

L'application 46 est également apte à assurer la gestion des travaux, les opérations d'entrée-sortie sur les périphériques, l'affectation des ressources aux différents processus, l'accès aux bibliothèques de programmes et aux fichiers, ainsi que la compatibilité des travaux.

Dans l'exemple de la figure 2, une session nécessitant une identification du réseau local est initiée entre le serveur 27 et un des équipements connecté au dispositif 12 d'accès. Dans l'exemple de la figure 2, cet équipement est l'ordinateur 24. Ainsi, l'application 46 est téléchargée dans l'ordinateur 24 du réseau domestique 22.

La mémoire de programmes est divisée en plusieurs zones, chaque zone correspondant à une fonction ou à un mode de fonctionnement du programme 45 de vérification de port. Seules les zones de la mémoire de programme de l'ordinateur 24 intéressant le plus directement l'invention sont représentées.

Une zone 48 comporte des codes instructions pour recevoir du dispositif d'accès 21 le programme de vérification de port, pour enregistrer ledit programme dans une mémoire temporaire et pour exécuter ledit programme.

Une zone 49 comporte des codes instructions pour élaborer une requête de récupération de fichier et pour transmettre ladite requête à destination du serveur 27 par l'intermédiaire du dispositif d'accès 21 sur le port spécifique.

Une zone 50 comporte des codes instructions pour recevoir du dispositif d'accès 21 le fichier, récupéré de la mémoire 38 de données du serveur 27, sur le port spécifique. Une zone 51 comporte des codes instructions pour transmettre au serveur 27 et sur le port spécifique une notification d'accusé de réception du fichier reçu.

Dans le cas où la session, nécessitant une identification du réseau local, est initiée par un équipement itinérant, la requête de récupération de fichier élaborée ne pourra pas être envoyée car le port spécifique pour la communication entre le serveur 27 et ledit équipement est bloqué par le FAI.

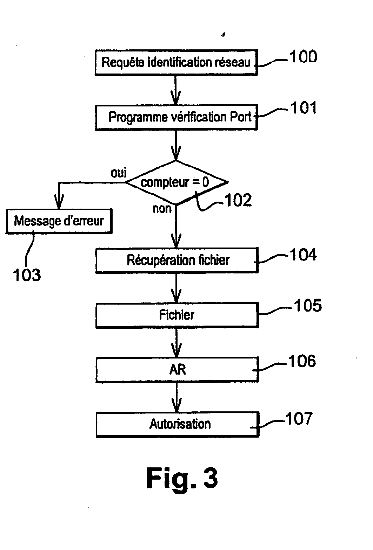

La figure 3 montre une illustration d'étapes de fonctionnement du procédé, selon un mode de réalisation de l'invention. La figure 3 montre une première étape préliminaire 100 dans laquelle l'application 31 d'authentification de réseau local reçoit une requête d'identification d'un réseau local authentifié par une adresse IP publique et un port d'origine.

A une étape 101, l'application 31 transmet le programme de vérification de port à l'adresse publique et au port d'origine. Ce programme de vérification est associé à un port spécifique sur lequel toutes les communications ultérieures, entre l'équipement ayant initié la session et l'application 31 d'authentification, devront s'effectuer.

A une étape 102, l'application 31 d'authentification lance un compteur à rebours, dont la durée est de préférence de l'ordre de la seconde, temps pendant lequel il est en attente d'une requête de récupération de fichier.

Si, à l'issue de cette durée de comptage du compteur à rebours, à une étape 103, aucune requête n'est reçue du réseau 23 Internet, l'application 31 émet un message d'erreur ou un formulaire d'authentification par mot de passe à destination de l'adresse IP publique et du port d'origine. Le choix entre demande d'authentification ou message d'erreur dépend de la politique commerciale de l'opérateur. Dans ce cas, il est considéré que l'adresse IP publique est celle du réseau itinérant 29 et que l'équipement ayant initié la session est un itinérant.

Sinon, à une étape 104, lorsque l'application reçoit du réseau Internet une requête de récupération du fichier sur le port spécifique, il prélève, à une étape 105, le fichier demandé et le transmet sur l'adresse publique et le port spécifique.

Dès que l'application reçoit, à une étape 106, une notification d'accusé de réception de l'adresse IP publique et du port spécifique, l'adresse IP publique est identifiée comme celle du réseau local domestique et la poursuite de la session avec le serveur 27 est autorisée, à une étape 107, en utilisant le port spécifique.

Dans un mode de réalisation, l'étape 106 d'élaboration, d'émission et de réception d'un accusé de réception peut ne pas être effectuée. Dans ce cas, dès que le serveur 27 transmet le fichier demandé sur l'adresse publique et le port spécifique, il autorise la poursuite de la session avec le serveur 27.

L'invention permet ainsi aux FAI d'attribuer un seul identifiant public IP par dispositif d'accès, autorisant du coup une meilleure gestion des stocks d'adresses IP disponibles, tout en authentifiant le réseau identifié par cette adresse IP de manière simple. Le procédé de l'invention est peu coûteux car il ne nécessite ni une mise à jour des dispositifs d'accès existants, ni une modification structurelle ou fonctionnelle de ces dispositifs.

L'invention permet ainsi la mise en oeuvre d'une méthode d'authentification, d'un réseau local identifié par une adresse IP publique fiable, non connue de l'utilisateur, interdisant tout échange de mot de passe entre utilisateurs ainsi que transparente, c'est-à-dire sans contribution de l'utilisateur.

L'invention permet de différencier un réseau local domestique, d'un abonné d'un fournisseur d'accès dudit dispositif d'accès, d'un réseau local itinérant sans fil connecté audit dispositif d'accès.

L'invention permet aux intemautes d'utiliser la méthode de paiement sur facture internet proposée par les FAI sans saisie d'identifiant ou de mot de passe. En effet, le réseau, de manière très simple, est capable de différencier le réseau domestique d'un réseau itinérant. Le FAI peut ainsi, en utilisant un référentiel mettant en rapport l'adresse IP publique et le modem utilisateur de cette adresse IP publique, de reporter l'achat sur la facture de l'abonné sans risque d'erreur.

Il sera évident pour l'homme du métier que diverses modifications et variantes peuvent être apportées à la présente invention sans s'écarter de l'esprit ou de la portée de l'invention. Ainsi, la présente invention est censée couvrir les modifications et les variantes de la présente invention à condition qu'elles s'inscrivent dans les limites des revendications annexées et de leurs équivalents.

## Revendications

1. Procédé d'identification d'un réseau local (14, 11, 29, 22) identifié par une adresse IP publique dans lequel,
- un réseau local domestique (11, 22) et un réseau local itinérant sans fil (14, 29) distinct du réseau local domestique sont connectés à un réseau distant (10, 23) par l'intermédiaire d'un dispositif (12, 21) d'accès
- on affecte à chacun des réseaux locaux (14, 11, 29, 22) un identifiant réseau IP public correspondant à l'adresse IP publique attribuée au dispositif d'accès et un port d'origine de communication,
**caractérisé en ce que** :
- on émet (100) du réseau distant à destination du réseau local une application (46) de vérification de port,
- lors de l'exécution de l'application de vérification de port sur le réseau local, une requête (104) de récupération d'un fichier est transmise du réseau local sur le réseau distant par l'intermédiaire d'un port de communication spécifique,
- ce port étant spécifique **en ce qu'**il n'est accessible que pour un réseau local domestique d'un abonné d'un fournisseur d'accès dudit dispositif d'accès et inaccessible depuis un réseau local itinérant,
- le réseau local est authentifié comme étant le réseau local domestique lorsque ledit réseau local reçoit du réseau distant une réponse à la requête de récupération de fichier sur le port spécifique,
et **en ce que** lors de la procédure d'identification du réseau local connecté au réseau distant :
- on déclenche (102) un compteur à rebours d'une durée prédéfinie, dès que l'application de vérification de port est transmise par le réseau distant au réseau local, et
- si, à l'issue de ce compteur (103), aucune requête de récupération n'est reçue par le réseau distant, alors le réseau local est considéré comme étant le réseau local itinérant et un message d'erreur et/ou une requête d'authentification par mot de passe est transmis du réseau distant au réseau local sur le port d'origine.

2. Procédé selon l'une des revendications précédentes, dans lequel :
- le réseau local transmet (106) au réseau distant un message d'accusé de réception de la réponse à la requête de récupération de fichier sur le port spécifique.

3. Procédé selon l'une des revendications précédentes, dans lequel les communications entre le réseau local et le réseau distant, lors de la procédure d'identification dudit réseau local, s'effectuent sur le port spécifique.

4. Procédé selon l'une des revendications précédentes, dans lequel, après authentification du réseau local, les communications entre ledit réseau local et le réseau distant s'effectuent sur le port spécifique.

5. Procédé selon l'une des revendications précédentes, dans lequel une requête d'identification du réseau local est initiée par le réseau distant, lors d'une transaction par une méthode de paiement sur facture Internet ou lorsque des services d'un Fournisseur d'accès nécessite une telle identification.

6. Serveur (27) d'identification d'un réseau local itinérant sans fil (14, 29) distinct d'un réseau local domestique (11, 22),
- ledit réseau local domestique (11, 22) et ledit réseau local itinérant sans fil (14, 29) distinct du réseau local domestique étant connectés à un réseau distant (10, 23) par l'intermédiaire d'un dispositif (12, 21) d'accès,
- chacun des réseaux locaux (11, 14, 22, 29) étant identifié par un identifiant réseau IP public correspondant à l'adresse IP publique attribuée au dispositif (12, 21) d'accès auquel il est connecté et un port d'origine de communication,
**caractérisé en ce qu'**il comporte :
- des moyens aptes à transmettre à un réseau local, connecté au dispositif d'accès, par l'intermédiaire du réseau distant, une application de vérification de port,
- des moyens destinés à prélever dans une mémoire de données un fichier et de le transmettre au réseau local sur un port spécifique, en réponse à une requête de récupération du fichier reçue dudit réseau local, ce port distinct du port d'origine est spécifique **en ce qu'**il n'est accessible que pour un réseau local domestique, d'un abonné d'un fournisseur d'accès dudit dispositif d'accès et inaccessibe depuis un réseau local itinérant,
- des moyens pour déclencher (102) un compteur à rebours d'une durée prédéfinie dès que l'application de vérification de port est transmise par le réseau distant au réseau local, et
- des moyens pour transmettre un message d'erreur et/ou une requête d'authentification par mot de passe du réseau distant au réseau local sur le port d'origine, si à l'issue de ce compteur (103) aucune requête de récupération n'est reçue par le réseau distant, alors le réseau local est considéré comme étant le réseau itinérant.

## Patentansprüche

1. Verfahren zur Identifizierung eines durch eine öffentliche IP-Adresse identifizierten lokalen Netzwerks (14, 11, 29, 22), bei dem
- ein lokales Heimnetzwerk (11, 22) und ein vom lokalen Heimnetzwerk zu unterscheidendes lokales kabelloses Mobilnetzwerk (14, 29) mittels einer Zugangsvorrichtung (12, 21) mit einem Fernnetzwerk (10, 23) verbunden sind
- man jedem der lokalen Netzwerke (14, 11, 29, 22) eine IP-Netzwerkkennung entsprechend der der Zugangsvorrichtung zugeteilten öffentlichen IP-Adresse und eine Ausgangsschnittstelle zuweist
**dadurch gekennzeichnet, dass**
- man von dem Fernnetzwerk dem lokalen Netzwerk eine Anwendung (46) zur Verifizierung der Schnittstelle schickt (100).
- während der Ausführung der Anwendung zur Verifizierung der Schnittstelle auf dem lokalen Netzwerk von diesem eine Abrufanforderung (104) einer Datei über eine spezifische Kommunikationsschnittstelle dem Fernnetzwerk übermittelt wird,
- diese Schnittstelle darin spezifisch ist, dass sie nur über ein lokales Heimnetzwerk eines Abonnenten eines Anbieters dieser Zugangsvorrichtung zugänglich, jedoch von einem lokalen Mobilnetzwerk unerreichbar ist.
- das lokale Netzwerk wird als lokales Heimnetzwerk authentifiziert, wenn dieses lokale Netzwerk vom Fernnetzwerk eine Antwort auf die Dateienabrufanforderung über die spezifische Schnittstelle empfangen hat,
und dadurch, dass während des Identifizierungsvorgangs des mit einem Fernnetzwerk verbundenen lokalen Netzwerkes
- man, sobald die Anwendung zur Verifizierung der Schnittstelle vom Fernnetzwerk an das lokale Netzwerk übermittelt ist, einen Countdown-Zähler mit einer vorgegebenen Laufzeit in Gang setzt (102) und
- wenn nach Ablauf des Countdown-Zählers (103) vom Fernnetzwerk keine Abrufanforderung empfangen worden ist, das lokale Netzwerk als das lokale Mobilnetzwerk betrachtet und eine Fehlermeldung und/oder eine Aufforderung zur Authentifizierung mittels Passwort vom Fernnetzwerk an das lokale Netzwerk auf die Ausgangsschnittstelle übermittelt wird.

2. Verfahren nach einem der vorhergehenden Ansprüche, bei welchem:
- das lokale Netzwerk an das Fernnetzwerk eine Bestätigungsnachricht über den Empfang der Antwort auf die Dateienabrufanforderung auf die spezifische Schnittstelle übermittelt (106).

3. Verfahren nach einem der vorhergehenden Ansprüche, bei welchem die Kommunikation zwischen dem lokalen Netzwerk und dem Fernnetzwerk während dem Authentifizierungsvorgang dieses lokalen Netzwerkes über die spezifische Schnittstelle ausgeführt wird.

4. Verfahren nach einem der vorhergehenden Ansprüche, bei welchem nach Authentifizierung des lokalen Netzwerkes die Kommunikation zwischen diesem lokalen Netzwerk und dem Fernnetzwerk über die spezifische Schnittstelle ausgeführt wird.

5. Verfahren nach einem der vorhergehenden Ansprüche, bei welchem, bei einer Transaktion durch eine Zahlungsart auf Internetrechnung oder wenn die Dienstleistung eines Zugangsanbieters eine Identifizierung nötig machen, vom Fernnetzwerk eine Aufforderung zur Identifizierung des lokalen Netzwerks ausgelöst wird.

6. Authentifizierungsserver (27) eines lokalen drahtlosen Mobilnetzwerkes (14, 29), welches von einem lokalen Heimnetzwerk (11, 22) zu unterscheiden ist
- wobei dieses lokale Heimnetzwerk (11, 22) und das vom lokalen Heimnetzwerk getrennte lokale drahtlose Mobilnetzwerk (14, 29) durch eine Zugangsvorrichtung (12, 21) mit einem Fernnetzwerk (10, 23) verbunden ist,
- wobei jedes der lokalen Netzwerke (11, 14, 22, 29) durch eine öffentliche IP-Netzwerkkennung, die der der Zugangsvorrichtung (12, 21), mit der es verbunden ist, zugewiesenen öffentlichen IP-Adresse entspricht, und eine Ausgangsschnittstelle identifiziert ist
**dadurch gekennzeichnet, dass** er
- Mittel enthält, die in der Lage sind, über das Fernnetzwerk eine Anwendung zur Verifizierung der Schnittstelle an ein mit der Zugangsvorrichtung verbundenes lokales Netzwerk zu übermitteln,
- Mittel enthält, die dazu bestimmt sind, in einem Datenspeicher eine Datei zu entnehmen und sie als Antwort auf eine vom lokalen Netzwerk erhaltene Dateienabrufanforderung über eine spezifische Schnittstelle an das lokale Netzwerk zu übermitteln, wobei diese von der Ausgangsschnittstelle zu unterscheidende Schnittstelle darin spezifisch ist, dass sie nur von einem lokalen Heimnetzwerk eines Abonnenten eines Anbieters dieser Zugangsvorrichtung zugänglich, jedoch von einem lokalen Mobilnetzwerk unerreichbar ist.
- Mittel enthält, um einen Countdown-Zähler mit einer vorgegebenen Laufzeit in Gang zu setzen (102), sobald die Anwendung zur Verifizierung der Schnittstelle vom Fernnetzwerk an das lokale Netzwerk übermittelt wird und
- Mittel enthält, um eine Fehlermeldung oder eine Aufforderung zur Identifizierung mittels Passwort vom Fernnetzwerk an das lokale Netzwerk auf die Ausgangsschnittstelle zu übermitteln, wenn nach Ablauf des Countdown-Zählers (103) vom Fernnetzwerk keine Abrufanforderung empfangen worden ist, woraufhin das lokale Netzwerk als das mobile Netzwerk betrachtet wird.

## Claims

1. Method of identifying a local network (14, 11, 29, 22) identified by a public IP address wherein,
- a local home network (11, 22) and a roaming wireless local network (14, 29) different from the local home network are connected to a remote network (10, 23) through an access device (12, 21)
- a public IP network login corresponding to the public IP address allocated to the access device and an original communication port are assigned to each one of the local networks (14, 11, 29, 22),
**characterised in that**:
- a port verification application (46) is sent (100) from the remote network to the local network,
- during the execution of the port verification application on the local network, a file recovery request (104) is sent from the local network on the remote network through a specific communication port,
- this port, being specific **in that** it is only accessible for a local home network of an Internet provider's subscriber of the said access device and inaccessible from a roaming local network,
- the local network is authenticated as being the local home network when the said local network receives a response to the file recovery request from the remote network on the specific port,
and at the moment when the identification procedure from the local network is connected to the remote network:
- a countdown of a preset duration is triggered (102), as soon as the port verification application is sent by the remote network to the local network, and
- if, as an outcome from this countdown (103), no recovery request is received by the remote network, then the local network is considered as being the roaming local network, and an error message and/or an authentication request by password is sent from the remote network to the local network on the original port.

2. Method according to one of the previous claims, wherein:
- the local network sends (106) a message of acknowledgement of receipt of response to the file recovery request on the specific port to the remote network.

3. Method according to one of the previous claims, wherein the communications between the local network and the remote network, during the identification procedure of the said local network, occur on the specific port.

4. Method according to one of the previous claims, wherein, after authentication of the local network, the communications between the said local network and the remote network occur on the specific port.

5. Method according to one of the previous claims, wherein an identification request of the local network is initiated by the remote network, during a transaction by an Internet invoice payment method, or when Internet provider services require such identification.

6. A roaming wireless local network (14, 29) identification server (27) different from a local home network (11, 22),
- the said local home network (11, 22) and the said roaming wireless local network (14, 29), different from the local home network being connected to a remote network (10, 23) through an access device (12, 21),
- each one of the local networks (11, 14, 22, 29), being identified by a public IP network login, corresponding to the public IP address allocated to the access device (12, 21) to which it is connected, and an original communication port,
**characterised in that** it comprises:
- suitable means for sending a port verification application to a local network, connected to the access device, through the remote network,
- means for removing a file in a data memory and for sending it to the local network on a specific port, in response to a file recovery request received from the said local network, this port different from the original port is specific **in that** it is only accessible for a local home network of an Internet provider's subscriber of the said access device and inaccessible from a roaming local network,
- means for triggering (102) a countdown from a predefined duration, as soon as the port verification application is sent by the remote network to the local network, and
- means for sending an error message and/or an authentication request by password from the remote network to the local network on the original port, if no recovery request is received by the remote network from this counter (103), then the local network is considered as being the roaming network.
